# EUROPEAN PATENT APPLICATION

(11) **EP 3 733 532 A1**
(43) Date of publication of application: **04.11.2020**
(21) Application number: 20000155.0
(22) Date of filing: 16.04.2020
(51) Int. Cl.: B65B 9/06, B65B 67/02, B65B 59/00, B65B 51/32, B65B 61/06, B29C 65/74, B29C 65/00, B65B 43/04, B65B 51/14, B65B 51/30

(54) **ENVELOPING SYSTEM**

(30) Priority: 03.05.2019 IT 201900006500
(71) Applicant: MINIPACK-TORRE S.p.A., I-24044 Dalmine (Bergamo) (IT)
(72) Inventor: Torre, Fabio Emanuele, I-24044 Dalmine (BG) (IT)
(74) Representative: Garavelli, Paolo

(57) **Abstract**

An enveloping system is described, used for creating envelopes (14) with or without products inside, starting from a bobbin of single-bent material (5). The system is composed of: at least one lever-type arm (1), a control panel (18), a bearing plane (10), a film-opening sheet (6), welding blades (9', 9"), a recess for the cutting blade (8), pressure abutments (13) and an electro-pressure keeping magnet arm (7).

## Description

The present invention refers to an enveloping system.

Enveloping systems are known in the art, and are composed of a welding platform for materials with high electric resistivity (generally Ni-Cr) adapted to be heated through the passage of current and cause, together with the pressure exerted by a mobile arm 1 and by pressure abutments 13, the welding of the two layers of plastic film, a cutting system 2 for cutting the thereby obtained envelope.

Such manual systems start from a plane-leaf bobbin and are limited to welding two layers of film which the operator bends on themselves with a single welding plate, or starting from bobbins made of tubular material and leaving a side open. The automatic systems instead start from two bobbins and automatically create envelopes with a specific width.

Object of the present invention is providing a manual system with not one, but two welding plates, which gives a user the chance of creating envelopes when needed, with sizes chosen depending on the product which must be enveloped, starting from a single bobbin of single-bent material.

Starting from a bobbin made of single-bent material which can be cut to size depending on current needs, an operator must not have available different sizes of pre-formed envelopes, which with difficulty can be adapted to the sizes of the product to be packaged, thereby saving material and storage costs, in addition to facilitating an insertion of a product inside the thereby obtained envelope.

The above and other objects and advantages of the invention, as will appear from the following description, are obtained with an enveloping system as claimed in Claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:

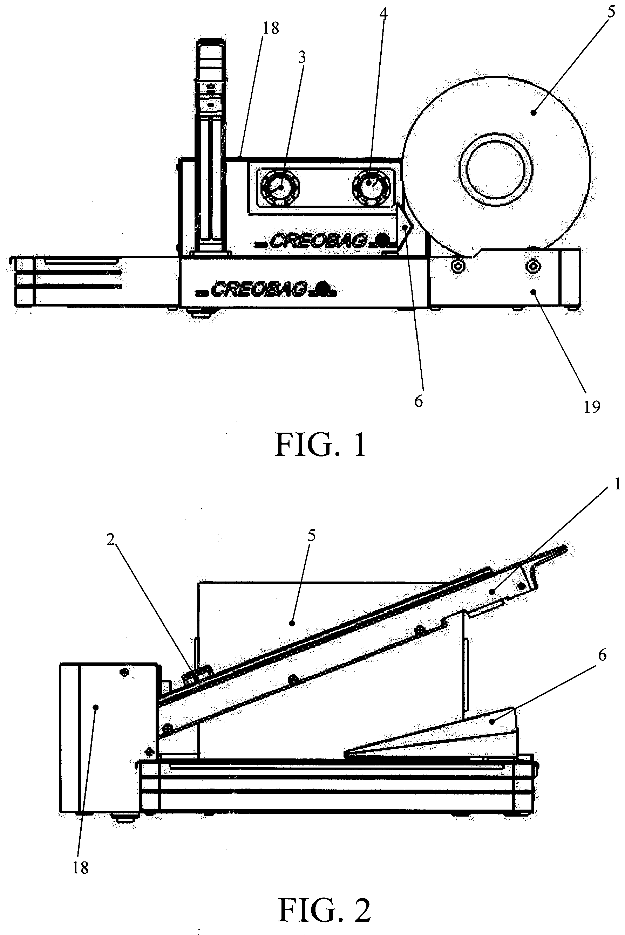

- Figure 1 shows a front view of a preferred embodiment of the improved enveloping system according to the present invention;
- Figure 2 shows a side view of the improved enveloping system;
- Figure 3 shows a front perspective sectional view of the machine;
- Figure 4 shows the operation of the improved enveloping system and the created envelope; and
- Figure 6 shows a front perspective view of the improved enveloping system of the present invention.

Therefore, with reference to the Figures, it is possible to note some preferred embodiments of the improved enveloping machine according to the present invention.

In the following description, for obvious reasons of briefness, all structural and operating details of the improved enveloping machine which are known and belonging to the prior art, will not be described.

As shown in the Figures, the improved enveloping system according to the present invention is composed of an arm 1 with rotary lever containing pressure welding abutments 13 and a cutting knife 2.

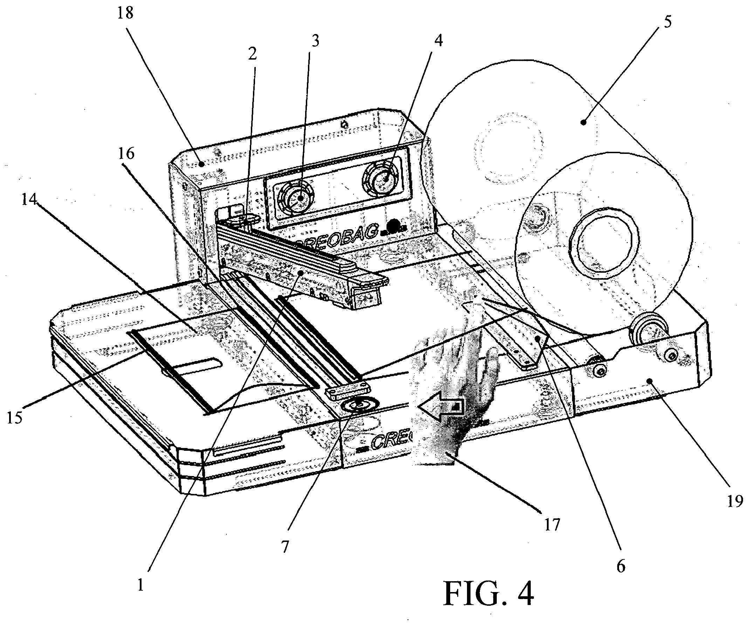

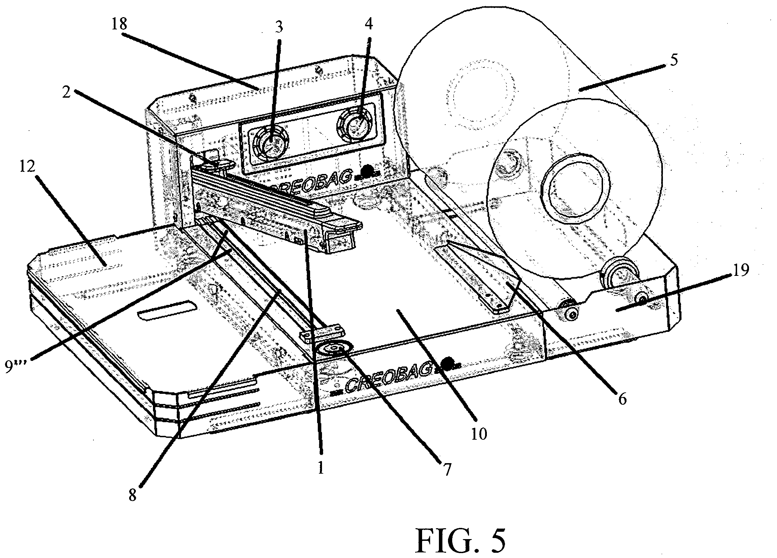

The single-bent bobbin 5 is placed on the bobbin-holder support 19 with its edge open on the front towards the operator. The two edges of the material of the bobbin are made pass in the film-opening sheet 6. The hand 17 of the operator (Figure 4), with or without the product to be enveloped, is inserted inside the two edges of the material of the bobbin 5, enabled by the film-opening sheet 6, while the material is pushed below the arm 1 with rotary lever with the desired length and made rest on the plane support 12.

From the control panel 12, the welding time is selected by means of a timer 3 dependin on the thickness and the type of the material, and the cooling time is selected by means of a timer 4.

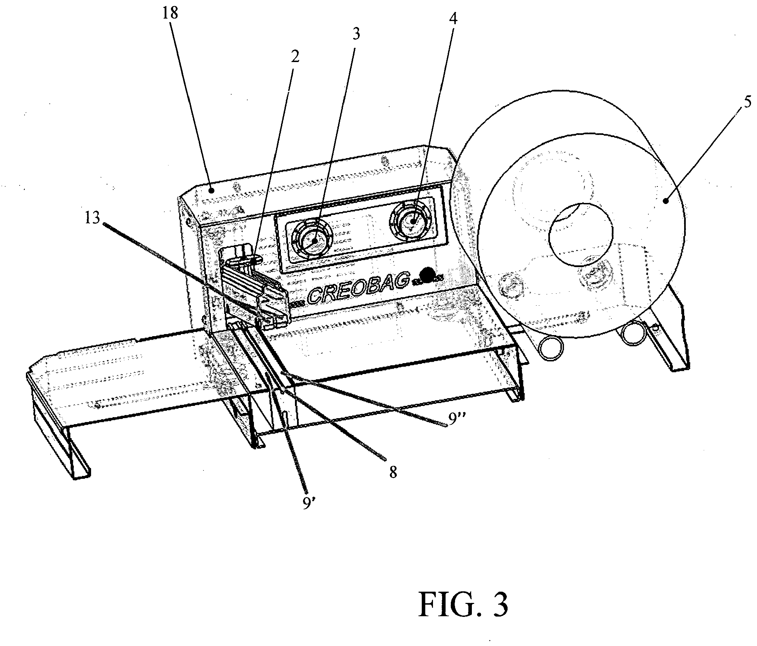

By lowering the arm 1 with rotary lever, a magnet 7 is actuated, which keeps the arm 1 itself pressed during the overheating time of the welding plates 9', 9'', designed to weld the two edges of material, for a certain cooling time in which the arm 1 keeps the pressure, but the welding plates 9', 9" are electrically disconnected. During this period, it is possible to cut the envelope with the blade-type knife 2 placed on the upper part of the arm 1 with rotary lever. The blade-type knife 2 cuts the envelope because there is a recess 8 (Figure 3) between the two welding plates 9', 9''.

Summarizing, the invention refers to an enveloping system comprising a single-bent bobbin 5 of enveloping material in a film, a film-opening sheet 6 placed downstream of the bobbin 5, and a lever-type welding arm 11, of the manual or automatic type, placed downstream of the film-opening sheet 6, wherein the lever-type welding arm 11 is equipped with two welding plates 9', 9' designed to cooperate with two respective pressure abutments 13 to weld the enveloping film; the two pressure abutments 13 are separated by a recess 8 designed for sliding therein a cutting blade 2, placed on the arm 11 and designed to cut the enveloping film once having made an envelope 14 of film, which can contain or not a product to be enveloped.

In fact, the enveloping system, in its manual form, allows creating envelopes 14 of the desired width with or without internal products, facilitating their insertion by means of the film-opening sheet 6.

This enveloping system has a pressure-keeping magnet 7 whose purpose is cooling the welding 15, 16 of the envelope 14 keeping them pressed for the time selected with a control timer 4.

Such improved enveloping system can be fastened to a wall or anyway placed vertically in order to facilitate the insertion of the products due to the natural fall and occupy less space.

The improved enveloping system can be integrated and coupled with machines designed for vacuum packaging or with machines which anyway need envelopes.

## Claims

1. Enveloping system comprising a single-bent bobbin (5) of enveloping material in a film, a film-opening sheet (6) placed downstream of said bobbin (5), and a lever-type welding arm (11), of a manual or automatic type, placed downstream of said film-opening sheet (6), **characterized in that** said lever-type welding arm (11) is equipped with two welding plates (9', 9") designed to cooperate with two respective pressure abutments (13) to weld the enveloping film, said two pressure abutments (13) being separated by a recess (8) designed for sliding therein a cutting blade (2), placed on said arm (11) and designed to cut the enveloping film once having made an envelope (14) of film, said system further comprising a control timer (4) and a pressure-keeping magnet (7) whose purpose is cooling the welding (15, 16) of the envelope (14) keeping the welding (15, 16) pressed for a time selected with the control timer (4).

2. Enveloping system according to claim 1, **characterized in that** it is designed to be coupled and placed upstream of machines designed for vacuum packaging or machines which need envelopes.
